(19) Europäisches Patentamt / European Patent Office / Office européen des brevets

(11) **EP 4 552 280 B1**

(12) **EUROPEAN PATENT SPECIFICATION**

(45) Date of publication and mention
of the grant of the patent:
**15.04.2026 Bulletin 2026/16**

(21) Application number: **22750678.9**

(22) Date of filing: **08.07.2022**

(51) International Patent Classification (IPC):
*H04L 9/00* (2022.01)      *H04L 9/32* (2006.01)

(52) Cooperative Patent Classification (CPC):
**H04L 9/008; H04L 9/3242**

(86) International application number:
**PCT/EP2022/069191**

(87) International publication number:
**WO 2024/008315 (11.01.2024 Gazette 2024/02)**

(54) **A SYSTEM AND METHOD FOR THE CONSISTENCY AND CORRECTNESS OF STORAGE AND DATABASE MANAGEMENT OPERATIONS AMONG DATA ENTITIES AND THEIR HASHED KEY VALUES**

SYSTEM UND VERFAHREN FÜR EINHEITLICHKEIT UND KORREKTHEIT VON SPEICHER- UND DATENBANKVERWALTUNGSOPERATIONEN ZWISCHEN DATENENTITÄTEN UND IHRER HASH-SCHLÜSSELWERTE

SYSTÈME ET PROCÉDÉ POUR LA COHÉRENCE ET L'EXACTITUDE D'OPÉRATIONS DE STOCKAGE ET DE GESTION DE BASE DE DONNÉES PARMI DES ENTITÉS DE DONNÉES ET LEURS VALEURS DE CLÉ HACHÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**14.05.2025 Bulletin 2025/20**

(73) Proprietor: **QPQ Ltd.**
**Dublin D02 AY86 (IE)**

(72) Inventors:
- **RAGNOLI, Emanuele**
  **Dublin, D02AY86 (IE)**
- **SAGIRLAR, Gokhan**
  **Dublin, D02AY86 (IE)**
- **RIPAMONTI, Roberto**
  **Dublin, D02AY86 (IE)**

(74) Representative: **Murgitroyd & Company**
**165-169 Scotland Street**
**Glasgow G5 8PL (GB)**

(56) References cited:
**US-A1- 2020 387 623**

- **CONG WANG ET AL: "Ensuring Data Storage Security in Cloud Computing", IACR, INTERNATIONAL ASSOCIATION FOR CRYPTOLOGIC RESEARCH, vol. 20090427:044412, 27 April 2009 (2009-04-27), pages 1 - 9, XP061003377, DOI: 10.1109/ IWQOS.2009.5201385**

## Description

Field of the Invention

The present invention relates to a system and method for the consistency and correctness of storage and database management operations among data entities and their hashed key values and, in particular, to maintaining synchronicity between data entities and associated tokens using homomorphic hashing.

Background of the Invention

Distributed Ledger Technology (DLT) is conventionally a decentralised data store that is managed by various participants, across multiple nodes or locations with no central authority acting as an arbitrator or a monitor for processing, validating, or authenticating transactions that occur in the DLT. One example of a DLT is Blockchain in which data records are stored as a chain of blocks

Further prior art solutions are disclosed in documents US 2020/387623 A1 and CONG WANG ET AL: "Ensuring Data Storage Security in Cloud Computing", IACR, INTERNATIONAL ASSOCIATION FOR CRYPTOLOGIC RESEARCH, vol. 20090427:044412, 27 April 2009 (2009-04-27), pages 1-9.

One problem with conventional DLTs is the segregation of digital assets and their trade. In a conventional DLTs this is performed via operations on the tokens representing the digital assets meaning that the tokens are traded or modified while their corresponding data assets which describe the token itself are not updated in real-time, instead they are typically manually updated at a later time. At the same time, segregation is guaranteed by storing the data of the digital asset itself on a data storage not necessarily linked to the DLT. This may cause a disconnect, a lack of symmetry and/or synchronicity between the tokens representing the digital assets and the digital assets themselves. As an example, in the financial sector tokens representing digital assets are typically traded on a DLT, but the custody and transfer of the digital assets themselves are typically performed by regulatory services.

The present invention seeks to address, at least in part, the problems and disadvantages with conventional DLTs described above.

Statement of Invention

The objects of the present invention are achieved by means of the appended set of claims.

According to a first aspect of the present invention there is provided a computing device comprising: an input/output module configured to manage interactions with one or more entities, wherein the input/output module comprises hardware configured to establish and/or maintain the interactions with the one or more entities; a backend storage module comprising a dual storage system, wherein the dual storage system comprises at least one data store comprising a dataset of data representing data entities and a dataset of associated digital tokens; a crypt module comprising secure hardware and software configured to perform cryptographic homomorphic hashing to generate one or more digital tokens associated with respective data entities; and wherein the input/output module is further configured to receive a call from an entity to perform an action in respect of a data entity; the backend storage module is configured to perform the action to the data entity; the crypt module is configured to apply a cryptographic homomorphic hashing function to the actioned data entity to generate the associated digital token; the backend storage module is further configured to store the actioned data entity and the generated associated digital token in the respective dataset in the dual storage system; and the crypt module is further configured to determine synchronicity between the data entity dataset and the digital token dataset based at least in part on the homomorphic hashing function.

In some embodiments, the dual storage system may be associated with one or more external data management entities, wherein one or more of the external data management entities may store corresponding data entities and/or associated digital tokens.

In some embodiments, the input/output module may be further configured to transmit a request to the one or more of the external data management entities to initiate an update of the actioned data entity and/or associated digital token, based at least in part on the data representing the actioned data entity.

In some embodiments, the input/output module may be further configured to request a status update for the data entity and/or associated digital token to the one or more of the external data management entities storing and/or performing one or more actions on the data entity and/or associated digital token, based at least in part on the data representing the data entity.

In some embodiments, the one or more of the external data management entities may include one or more of external DLTs, external legacy systems, other computing devices, external databases, and/or external servers.

In some embodiments, the one or more entities may include one or more of external devices, external clients, external/internal applications and external/internal data stores.

In some embodiments, the input/output module may be further configured to select a communication protocol for an interaction with an entity.

In some embodiments, an interaction includes one or more of network formatting between two or more computing devices, transmitting data and receiving data.

In some embodiments, the backend storage module may be further configured to maintain a homomorphic hash value of at least the dataset of data entities.

In some embodiments, the crypt module may be further configured to subtract a homomorphic hash of the existing data entity from the maintained homomorphic hash value of the dataset of data entities; and add a homomorphic hash of the actioned data entity to the maintained homomorphic hash value of the dataset of data entities.

In some embodiments, the crypt module may be further configured to calculate a sum of the digital token dataset based on modulo arithmetic; compare the determined homomorphic hash value of the dataset of data entities to the sum of the digital token dataset; and determine synchronicity if the determined homomorphic hash value of the data entity dataset matches the sum of the digital token dataset.

In some embodiments, if synchronicity is not determined, the crypt module may be further configured to analyse the data entity dataset and/or the digital token dataset to identify one or more data entities and/or digital tokens that may have caused the lack of synchronicity; and correct the identified one or more data entities and/or digital tokens.

In some embodiments, the action may comprise one or more of creating a new data entity, amending an existing data entity, or removing an existing data entity.

In some embodiments, the action may comprise one or more of fractionalising a digital asset described in a data entity, digitalisation and tokenisation of real assets described in a data entity, transfer of ownership of a digital asset described in a data entity, updating digital asset data described in a data entity, transfer of ownership of a right embedded in a digital asset described by a data entity, or ownership and privacy of personal data contained in a data entity.

In some embodiments, the input/output module may be further configured to check the authenticity and/or validity of the received call to perform an action in respect of a data entity.

In some embodiments, the crypt module is further configured to derive a Master secret key, wherein the Master secret key may be unique to each computing device and generated based on a Cryptographically Secure Pseudo-Random Number Generator or a Cryptographically Secure Random Number Generator.

In some embodiments, the backend storage module may be further configured to derive a data entity private and public key pair based on the derived Master secret key and data relating to the data entity; and store the derived public key in the data store.

In some embodiments, the backend storage module may be further configured to derive a Database key based on the Master secret key and data relating to the data store; and encrypt the data store with the derived Database key.

In some embodiments, the crypt module may be further configured to derive a homomorphic hash value of the dataset of data entities and the dataset of associated digital tokens; and sign the derived homomorphic hash value of the dataset of data entities and the dataset of associated digital tokens.

In some embodiments, the input/output module may be further configured to receive an aggregate query from an actor; and transmit an answer to the aggregate query and a determined cryptographic proof to the actor; and the crypt module may be further configured to determine the answer to the aggregate query based at least in part on the dataset of data entities; and determine the cryptographic proof of the determined answer to the aggregate query.

In some embodiments, the determined cryptographic proof may comprise one or more cryptographic commitments and/or cryptographic hashes.

In some embodiments, the computing device may be a Treasury and Custody Account system.

According to a second aspect of the present invention there is provided a system comprising an interconnected network of computing devices according to any one of the features of the first aspect.

According to a third aspect of the present invention there is provided a Distributed Ledger Technology system comprising: two or more operatively interconnected computing devices according to any one of the features of the first aspect, wherein each computing device is a node in the Distributed Technology Ledger system.

According to a fourth aspect of the present invention there is provided a method comprising: receiving a call from an entity to perform an action in respect of a data entity; performing the action to the data entity; applying a homomorphic hashing function to the actioned data entity to generate an associated digital token; storing the actioned data entity and the generated associated digital token in a dual storage system, the dual storage system comprising at least one data store comprising a dataset of data representing data entities and a dataset of associated digital tokens; and determining synchronicity between the data entity dataset and the digital token dataset based at least in part on the homomorphic hashing function.

In some embodiments the dual storage system may be associated with one or more external data management entities, wherein one or more of the external data management entities may store corresponding data entities and/or associated digital tokens.

In some embodiments, the method may further comprise transmitting a request to the one or more of the external data management entities to initiate an update of the actioned data entity and/or associated digital token, based at least in part on the data representing the actioned data entity.

In some embodiments, the method may further comprise requesting a status update for the data entity and/or associated digital token to the one or more of the external data management entities storing and/or performing one or more actions on the data entity and/or associated digital token, based at least in part on the data representing the data entity.

In some embodiments, the one or more of the external data management entities may include one or more of external DLTs, external legacy systems, other computing devices, external databases, and/or external servers.

In some embodiments, the one or more entities may include one or more of external devices, external clients, external/internal applications and external/internal data stores.

In some embodiments, the method may further comprise selecting a communication protocol for an interaction with an entity.

In some embodiments, an interaction may include one or more of network formatting between two or more computing devices, transmitting data and receiving data.

In some embodiments, the method may further comprise maintaining a homomorphic hash value of at least the dataset of data entities.

In some embodiments, the may method further comprise subtracting a homomorphic hash of the existing data entity from the maintained homomorphic hash value of the dataset of data entities; and adding a homomorphic hash of the actioned data entity to the maintained homomorphic hash value of the dataset of data entities.

In some embodiments, determining synchronicity between the data entity dataset and the digital token dataset may comprise calculating a sum of the digital token dataset based on modulo arithmetic; comparing the determined homomorphic hash value of the dataset of data entities to the sum of the digital token dataset; and determining synchronicity if the determined homomorphic hash value of the data entity dataset matches the sum of the digital token dataset.

In some embodiments, if synchronicity is not determined, the method may further comprise analysing the data entity dataset and/or the digital token dataset to identify one or more data entities and/or digital tokens that has caused the lack of synchronicity; and correcting the identified one or more data entities and/or digital tokens.

In some embodiments, the action may comprise one or more of creating a new data entity, amending an existing data entity, or removing an existing data entity.

In some embodiments, the action may comprise one or more of fractionalising a digital asset described in a data entity, digitalisation and tokenisation of real assets described in a data entity, transfer of ownership of a digital asset described in a data entity, updating digital asset data described in a data entity, transfer of ownership of a right embedded in a digital asset described by a data entity, or ownership and privacy of personal data contained in a data entity.

In some embodiments, the method may further comprise checking the authenticity and/or validity of the received call to perform an action in respect of a data entity.

In some embodiments, the method may further comprise deriving a Master secret key, wherein the Master secret key may be unique to each Treasury and Custody Account system and generated based on a Cryptographically Secure random Number Generator or a Cryptographically Secure Pseudo-random Number Generator.

In some embodiments, performing the action may further comprise deriving a data entity private and public key pair based on the derived Master secret key and data relating to the data entity; and storing the derived public key in the data store.

In some embodiments, the method may further comprise deriving a Database key based on the Master secret key and data relating to the data store; and encrypting the data store with a the Database key.

In some embodiments, the method may further comprise deriving a homomorphic hash value of the dataset of data entities and the dataset of associated digital tokens; and signing the derived homomorphic hash value of the dataset of data entities and the dataset of associated digital tokens.

In some embodiments, the method may further comprise receiving an aggregate query from an actor; determining an answer to the aggregate query based at least in part on the dataset of data entities; determining a cryptographic proof of the determined answer to the aggregate query; and transmitting the answer to the aggregate query and the determined cryptographic proof to the actor.

In some embodiments, the determined cryptographic proof may comprise one or more cryptographic commitments and/or cryptographic hashes.

According to a fifth aspect of the present invention there is provided a computer program product comprising computer readable executable code for implementing any one of the features of the method of the fourth aspect.

It will be appreciated that any features described herein as being suitable for incorporation into one or more aspects or embodiments of the present disclosure are intended to be generalizable across any and all aspects and embodiments of the present disclosure. Other aspects of the present disclosure can be understood by those skilled in the art in light of the description, the claims, and the drawings of the present disclosure. The foregoing general description and the following detailed description are exemplary and explanatory only and are not restrictive of the claims.

Embodiments of the present invention will now be described, by example only, and with reference to the accompanying drawings, in which:

Figure 1 shows a Distributed Ledger Technology system according to one or more embodiments of the present invention.

Figure 2 shows a flow chart for a Master Secret Key generation according to one or more embodiments of the present invention.

Figure 3 shows a flow chart for an Asset Key-Pair derivation according to one or more embodiments of the present invention.

Figure 4 shows a flow chart for Transaction signing according to one or more embodiments of the present invention.

Figure 5 shows a flow chart for a DB Key derivation according to one or more embodiments of the present invention.

Figure 6 shows a flow chart of a Financial Digital Asset Fractionalisation according to one or more embodiments of the present invention.

Description

The present invention aims to provide a trusted, secure computing and data storage environment that stores both data entities and their corresponding hash values, hereby defined as tokens. The present invention is based on a modularised architecture that incorporates a fully-fledged dual data store for the management of the data entities (wherein each data entity may describe a digital asset) and associated tokens. The token storage component of the data store and the data entity storage component of the data store are synchronised using advanced cryptographic protocols, thereby ensuring symmetry between the operations performed on the tokens and the operations performed on the associated data entities along with the integrity of the operations' results.

A system and method for the storage, management, substantially real-time update and operational consistency of data entities and their respective tokens (e.g. hashed values) is provided wherein the system stores, maintains and manages one or more data stores with dual data storage for the data entities and their associated tokens to ensure, in substantially real time, that database operations performed on the data entities are consistent with equivalent operations on the corresponding tokens and vice-versa. The substantially real time integrity may be performed utilising a cryptographic method that parallelises cryptographic primitives known as homomorphic hashing. For example, proving that appending or removing data from a data entity (e.g. the digital asset) is consistently replicated in its respective token is performed with the application of the homomorphic hashing.

The present invention thus describes the combination of methods and systems that provide dual storage and execution environments for the management of data entities and their associated tokens. The present invention provides several advantages over the conventional DLTs, including:

1. a dual storage system for storing the data entities and their associated tokens;

2. synchronising the operation on data entities and the associated tokens with advanced cryptographic protocols that use homomorphic hashing;

3. hardware-level security that exploits an elastic scalable and crash fault-tolerant network of secure enclaves; and

4. an execution environment that enables programmability for software applications (e.g., digital contracts, applications of business flows) and for the operations of one or more of network genesis, data synchronisation, and consensus protocols participation.

A dual storage system is maintained by a computing device (e.g. a Treasury and Custody Account (TCA) system) and the dual storage system comprises one or more data stores. The data store may be defined as any repository for persistently storing collections of data and may include one or more of databases, file systems, etc. Accordingly, different data stores may be utilised for different DLTs, for example, for a Blockchain DLT the data store is typically a database. The dual storage system may be defined as any storage system that includes a dataset of the data entities and a separate dataset of associated tokens. The datasets may be stored in the same data store or different data stores, for example, may be stored in the same database or different databases.

The dataset of the data entities may include data that is, or is representative or indicative of, digital assets, for example the data of each data entity may include one or more of digital asset metadata (e.g. name, symbol, scope, type, and so on), digital asset history, associated attachments (e.g. contracts, images, binary data, and so on).

The dataset of associated tokens may include a homomorphic hash value of the associated data entity (e.g. of the digital asset) and may also include associated information, for example, a token symbol, token name, along with any other relevant information, for example, decimal, total supply, and so on.

The tokens are generated by applying a homomorphic hashing function to the associated data entity (or the described digital asset) and are therefore linked.

By maintaining a dual storage system for a data entity dataset and an associated token dataset within the computing device (e.g. TCA) based on homomorphic hashing, then synchronicity between the datasets can be advantageously monitored.

The dual storage system of the computing device may further be part of, or associated with, data stores of one or more external data management entities, for example, external DLTs, external legacy systems (e.g.

external financial asset management systems), other TCAs, external databases, external servers, and so on. The data stored in the computing device relating to the data entities and/or associated tokens may also be stored in one or more of the external data management entities and therefore the data stored in the dataset of data entities and/or the dataset of associated tokens of the computing device (e.g. TCA) may be used as a reference pointer to the corresponding data stored in the one or more external data management entities. This advantageously enables the data stored in the one or more external data management entities to be updated and maintained as the computing device (e.g. TCA) can perform, or initiate, an update of the corresponding data stored in the one or more external data management entities using the reference pointers.

Similarly, as the data stored in the one or more external data management entities may have operations or actions performed thereon, independent to the computing device, the computing device (e.g. TCA) may request updates from the one or more external data management entities in order to maintain an up-to-date data store of the dataset of digital entities and the dataset of associated tokens.

The computing device (e.g. TCA) may request updates from the one or more external data management entities continuously or periodically. The computing device (e.g. TCA) may subscribe to one or more of the external data management entities, or subscribe to one or more services or service providers to receive updates from the one or more external data management entities, either continuously or periodically. Alternatively, or additionally, the computing device may request updates to the data entities or associated tokens prior to performing an operation, or action, on any given data entity or associated token.

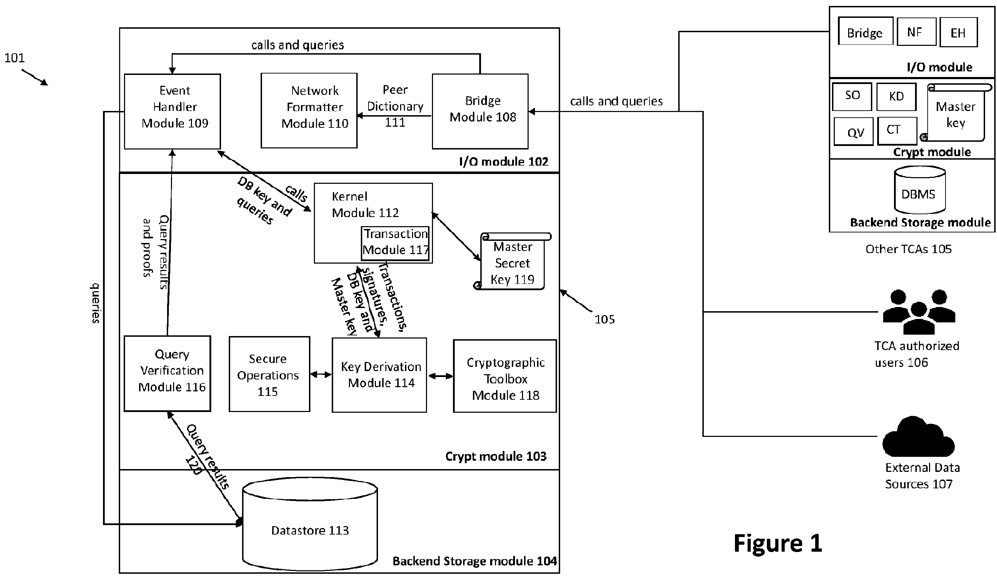

With reference to Figure 1, the system architecture may include a DLT 101 that includes one or more interconnected computing devices, for example, the Treasury and Custody Account (TCA) systems 105, wherein if the DLT 101 includes two or more TCAs then each TCA 105 may be operatively interconnected by one or more internal and/or external networks, for example, the internet, wired network, wireless network, and so on, to form a DLT. Each TCA 105 of the DLT 101 may also operatively connect with one or more TCA authorised users 106 and/or one or more external data sources 107.

Alternatively, the system architecture may include a plurality of interconnected TCAs that operatively interact but do not form a DLT.

The TCAs may also interact with one or more external data management entities, for example, external DLTs, external legacy systems (e.g. external financial asset management systems), other TCAs, external databases, external servers, and so on.

Each TCA 105 may include one or more modules in order to perform and provide various operations and functionality. For example, each TCA 105 may include an Input/Output (I/O) module 102, a Crypt module 103 and a Backend Storage (BS) module 104. Each of the three modules may include any number of sub-modules, as will be described below. As will be appreciated, each TCA 105 may include any number of modules and associated sub-modules, as required to perform and provide the operations and functionality for the DLT 101.

The I/O module 102 may include functionality to manage the interactions between the system and external applications. The I/O module may include one or more sub-modules, for example, a Bridge module 108, an Event Handler module 109, and a Network Formatter module 110.

The Bridge module 108 provides the functionality to establish and maintain secure connections with external applications, such as external TCAs 105, external data stores 107, and internal calls from other modules of the system. The Bridge module 108 may include one or more libraries and protocols that enable the Bridge module 108 to perform one or more of the following functionalities/operations:

- establish communication with a client (e.g., TCA's authorised users 106) through integration to a common means of interaction, for example, a user interface, mobile application, command-line interface, and so on;

- introduce a new peer with a peer dictionary 111 to the Network Formatter module 110, including information related to the new peer, for example, IP address, cryptographic certificates, public keys, peer's data exchange format, and so on;

- perform authentication (e.g., identity and certificate checks) and integrity checks (e.g., message checksum controls) of any received messages;

- form calls and queries to external applications in the network with appropriate message formatting via data serialisation and privacy protection (e.g., encryption, data masking, etc.), and sends them to the Event Handler module 109 for execution; and

- receive calls and queries sent to the TCA 105, performs validity and authenticity checks on any received messages, translate any messages with the appropriate message deserialisation format, and send internal call requests to the Event Handler module 109.

The Network Formatter module 110 provides the functionality to form a communication and data exchange network infrastructure of two or more TCAs 105 and/or joining the TCA 105 to a network of external TCAs 105 and applications. The Network Formatter module 110 may further receive a peer dictionary 111 from the Bridge module 108 to enable the Network Formatter module 110 to set up any communication infrastructure with a new peer. The

Network Formatter module 110 may comprise a suite of procedures that provide one or more of the following functionalities/operations:

- if the new peer is part of an existing network, the Network Formatter 110 may record the peer's identity and cryptographic keys to be used by the Bridge module 108;

- if the Network Formatter module 110 is to form a new network, the Network Formatter module 110 may set up a private or public identity management scheme for the new network, for example Certificate Authority (CA), Public Key Infrastructure (PKI), and so on; and

- set up a common data interface with a peer according to the peers' data exchange format, persist and maintain a routing table and/or access to the routing table if the routing table is configured and used as a service.

The Event Handler Module 109 provides the functionality for handling and executing external queries and/or calls (e.g., queries and/or calls from an external application) and internal queries and/or calls (e.g., queries and/or calls from TCA's authorised users 106). It may receive external and internal queries and/or calls from the Bridge module 108 and/or the Kernel module 112 (described below).

The Event Handler module 109 may create an 'event' per call and/or query, wherein the event represents, or is indicative of, an active process running on one node in the network for external queries and/or calls, or inside the TCA 105 for internal queries and/or calls. The event runs, or executes, in the TCA's memory and handles the active process's data traffic, such as data exchange among nodes (e.g., TCAs 105, external applications, etc.) that are running, or executing, the process. The event outputs the result of the process (e.g., query result data, transaction execution result, etc.) once the process ends.

The Event Handler module 109 may comprise a suite of procedures that perform one or more functionalities/operations, including:

- create an event per each call and/or query, and being capable of storing, collecting, and processing data;

- provide parallelism on event execution by running, or executing events asynchronously; and

- in conjunction with the Backend Storage module 104, perform a variety of access control checks on external queries.

The I/O module 102 may further include the functionality to transmit instructions to one or more external data management entities, for example, external DLTs, external legacy systems (e.g. external financial asset management systems), other TCAs, external databases, external servers, and so on, wherein the instructions perform or initiate an update of the data entities and/or digital tokens stored in a data store of the one or more external data management entities. The instructions may include the relevant information in order to update the data store of the one or more external data management entities.

The I/O module 102 may enable the TCA to communicate to external entities, both as receiver of messages and sender of messages. The I/O module may instruct the external entity to execute an update. Those messages can be structured in the form of HTTP requests or AMQP (Advanced Message Queuing Protocol) or any other messaging protocol that is suitable for this purpose. The content of such messages may vary depending on the request, for example, it may contain the identifier of an asset of which the TCA wants to know the current status on the external system.

The I/O module 102 may further include the functionality to request updates from one or more external data management entities, either continuously, periodically, or prior to any operation or action performed on a data entity and/or token stored in the dual storage system of the TCA, which is also stored or maintained on the one or more external data management entities.

The Backend Storage module 104 may comprise one or more data stores 113, such as one or more databases, for example, relational DBMS, NoSQL databases, object-oriented databases, and so on, wherein the one or more data stores may include one or more of:

- data which may authenticate and identify the TCA 105 on a distributed or centralised network;

- data entities which may describe one or more digital assets;

- one or more tokens generated from the related, or associated, data entity;

- data related to, or indicative of, the operations performed on the data entities and their associated tokens.

The Backend Storage module 104 may comprise a set of libraries and protocols that provide one or more functionalities/operations, such as:

- database management operations, for example, data storage, data retrieval, data update, transaction and concurrency support, fault tolerance, and so on;

- retrieve information relating to a data entity describing one or more digital assets, given the corresponding key;

• retrieve information relating to an owner, given a key corresponding to a data entity describing one or more digital assets;

• retrieve information relating to one or more performed transactions, given the owner;

• create a new data entity describing one or more digital assets by splitting (e.g. fractionalising) an existing digital asset, which requires the update of the data entity describing the digital assets information based on the newly created data entity describing the one or more digital assets;

• apply access control policies for users trying to access the data store, such as policy-based access control, role-based access control, attribute-based access control, and so on;

• perform audit services for logging of requests and responses from the data store; and

• perform various analytics tasks for Know Your Customer (KYC), Anti-Money Laundering (AML), and scoring models.

The Backend Storage module may also maintain a signed hash value of the entire dataset, for example, the tokens and associated digital assets, within the data store. By maintaining a signed hash value of the entire dataset in the data store provides the authenticity of the dataset itself. If the dataset is modified, for example, performing an action to modify a digital asset of a data entity, add a data entity, remove a data entity, and so on, the hash value of any modified dataset may subsequently be computed by the Crypt Module by, for example, subtracting the hash values of the old versions of the data entity and the associated token and adding the new, or modified, versions' hash values of the data entity and the associated token. The new dataset's hash value may then be signed.

The hash values may be computed by the Crypt Module using a homomorphic hash function, which advantageously provides synchronicity between tokens and associated data entities, such that whenever an action, such as an update operation, modifies a token (or data entity), a corresponding update operation is issued on the corresponding data entity (or token).

The corresponding update operation may be directly performed by the system in order to maintain synchronicity between the digital entities and their associated tokens. In order to identify or check that the synchronicity is maintained the homomorphic hashing protocol may compare the homomorphic hash value calculated over, for example, the digital entities dataset to the sum of the associated tokens' dataset, wherein the associated tokens are created by applying the homomorphic hashing protocol to each corresponding digital entity data entry. Thus, a lack of synchronicity may be identified when the homomorphic hash value of the data entities dataset is different from sum of the associated tokens' dataset. If a lack of synchronicity is identified then the data entities dataset and/or the associated tokens dataset may be analysed to determine the error in either, or both, of the data entities dataset and the associated tokens dataset. The datasets may be analysed to identify which data entity and/or token has caused the lack of synchronicity by, for example, for each data entity the hash function may be applied to derive the associated token which may then be compared to the token dataset to determine if that derived token is present in the token dataset. Any data entities for which the corresponding derived token is not present in the token dataset can be identified as incorrect and system may take corrective actions, such as adding the derived token to the token dataset in place of the respective previous token for the identified data entities. Alternatively or additionally, the total number of data entities may be compared to the total number of tokens in order to determine if there is a mismatch between the datasets and take the appropriate corrective actions. Alternatively or additionally, the system may analyse one or more previous modifications to the datasets to identify any errors with the previous modifications and take the appropriate corrective actions. Once the corrective actions have been performed, it may re-check that the homomorphic hash value calculated over the data entities dataset subsequently matches the sum of the associated tokens' dataset.

The Crypt Module 103 may comprise secure hardware and/or secure software libraries that provide various functionality and performs various operations, for example, the Crypt module may provide the functionality/operations of one or more of:

• securing any or all of the data managed by the Backend Storage module 104;
• securing any or all of the information transmitted through the I/O module 102; and
• management of cryptographic keys and cryptographic hashes (e.g. digital tokens).

The Crypt module 103 may comprise any number of submodules, for example, the Crypt module 103 may include one or more of a Key Derivation module 114, a Secure Operations module 115, a Query Verification module 116, a Kernel module 112, a Transaction module 117, and a Cryptographic Toolbox module 118. As will be appreciated, the Crypt module 103 may include any number of the mentioned submodules as required for any particular implementation and may also include any additional submodules as necessary for any given implementation.

The Key Derivation Module 114 may comprise one or more software libraries to provide one or more functionalities, for example, the software libraries may execute a Key Derivation Function (KDF). The KDF may be responsible for providing the cryptographic key generation functionality. In this example, the Key Derivation module may receive as input a Master Secret Key 119, wherein the Master Secret Key 119 is unique to each TCA 105. The Master Secret Key 119 may be securely and randomly generated by the Secure Operations module 115 when the TCA 105 is first launched. The KDF may then, using the Key Derivation module 114 software libraries along with the Master Secret Key 119, generate and output a set of two or more cryptographic keys that may be hierarchically linked.

The use of a KDF provides a security advantage as it removes the need to store any cryptographic keys as they can be derived on demand from the Master Secret Key 119.

The Query Verification (QV) Module 116 may receive as an input one or more query results 120 on one or more items of encrypted data from the Backend Storage module 104. The QV module 116 may output a cryptographic proof that may have the format of a cryptographic commitment and cryptographic hashes. The QV module 116 performs this operation by providing proof of correctness and completeness of the query's result wherein the result may contain only those data items satisfying the query without revealing any further data items. The cryptographic proof may be constructed by the QV module 116 using committed data and/or authenticated data structures which enables an external entity to be proven efficiently and that the obtained result is correct and complete.

The Cryptographic Toolbox (CT) Module 118 may comprise a set of cryptographic procedures, schemes, and protocols to perform one or more functionalities/operations, such as:

- Data confidentiality, in which encryption schemes transform confidential input data into an encrypted format such that only authorised parties can access the confidential data;

- Data anonymisation, in which anonymisation procedures operate on the input data to ensure that such data can no longer be attributed to a given subject;

- Data authentication, in which signature schemes produce digital attestations that a given piece of data originated from the intended subject;

- Data integrity, in which integrity schemes guarantee that a given piece of data has not been modified;

- Advanced functionalities, in which several operations, such as advanced signature schemes or privacy-preserving computations over encrypted data, require the deployment of techniques including but not limited to zero-knowledge proofs (ZKPs), secure multi-party computation protocols (MPC), and so on; and

- Synchronization and consistency, in which homomorphic hashing protocols synchronise the operation on data entities and associated digital tokens.

The Secure Operations (SO) Module 115 may comprise software libraries and/or a network of security-sensitive hardware components, for example, secure enclaves. The SO module 115 may enable the secure execution of security-sensitive operations in the TCA 105. The SO module 115 may guarantee elasticity and fault tolerance for one or more of the cryptographic operations, for example, signing a transaction, which encrypt data at runtime. The SO module 115, upon initialisation of the TCA 105, may generate and secure the Master Secret Key 119, which may be output to the KD module 114.

One or more of the KD module 114, QV module 116 and CT module 118 may run, or execute, partially or entirely, inside the secure environment provided by the SO module 115.

The Kernel Module 112 may comprise a suite of procedures for providing one or more services for managing the TCA's hardware components and/or software programs running on, or executed by, the TCA 105. The Kernel module's 112 services may effectively enable one or more of the TCA modules to run or execute, interact or cooperate with each other, and/or form one or more process flows. Furthermore, the Kernel module's services may additionally provide programmability to the TCA 105, to enable the TCAs to deploy software programs, such as digital contracts and/or stand-alone applications. For internal updates to the Backend Storage module 104, the Kernel module 112 may additionally generate internal queries, for example, updates to the database schema, and transmit or provide those queries to the Event Handler module 109. The Kernel module may comprise libraries and protocols that provide one or more functionalities/operations, such as:

- low-level services that act as intermediaries between software applications and hardware, such as managing memory access, system calls, process interrupts, and so on;

- higher-level services for running one or more software applications, such as application memory management, file management, program interaction mechanisms, runtime environments, and so on;

- data synchronisation with a set of peers through data synchronisation libraries via the Event Handler module for data exchange;

- distributed computations with external TCAs 105 and/or applications connected through the Network Formatter module 110; and

- consensus algorithms for reaching an agreement on performed operations among data shared by TCAs 105.

The Kernel module 112 may further provide the capability to enable TCAs 105 to process, request, and/or verify shared data in a TCA network created by the Network Formatter module 110. This capability may enable TCAs 105 to act as nodes of a distributed network, where TCAs 105 can store, share and/or verify data, for example, through consensus libraries. Therefore, TCAs 105 may be able to form a Distributed Ledger Technology network, for example, a Distributed Database, where each TCA 105 may be a node in the network.

The Kernel module 112 may additionally comprise an integrated helper module called a Transaction Module 117, wherein the Transaction module 117 may be a software component connected to the Kernel module 112 and the KD module 114. The Transaction module 117 may create transactions, for example, calls for updating or querying external systems, related to the TCA's tokens for connected DLTs/TCAs and/or external applications. The Transaction module 117 may utilise the CT module 118 and the KD module 114 in order to perform any required cryptographic operations for creating the transactions. The Transaction module 117 may comprise a suite of procedures that perform one or more functionalities/operations, such as:

- creating transactions for interacting with the connected DLTs/TCAs and/or other external/internal applications;

- executing signature schemes or aggregate signature schemes, for example, Elliptic Curve Digital Signature Algorithm (ECDSA), Schnorr, Boneh-Lynn-Shacham (BLS), and/or their threshold versions, and so on; and

- running privacy-preserving tools for running, or executing, transactions, such as zero-knowledge proofs (e.g., ZK-snark, Plonk, Bulletproof, etc.), by exploiting libraries of the CT module 118.

In the system of the present invention there are several operations performed by one or more of the modules in order to facilitate the advantageous effects of the present invention.

For example, the Crypt module 103 provides the functionality to perform one or more of the operations of:

- master secret key generation;

- asset key pair derivation;

- transaction signing; and

- DB key derivation.

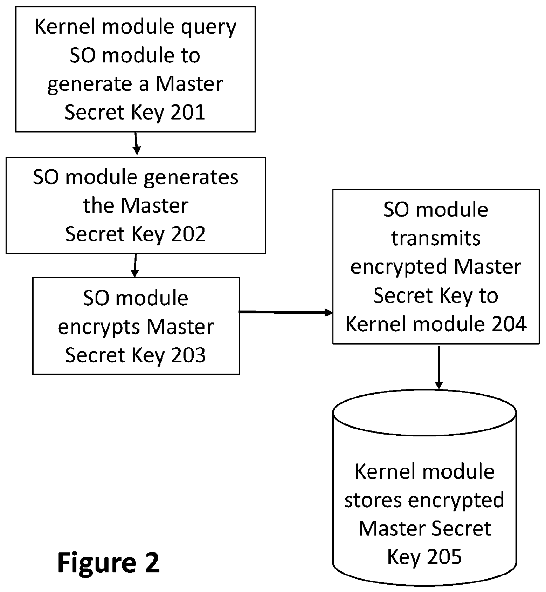

With reference to Figure 2, the operation of the Master secret key generation will now be described. To perform this operation and provide the Master secret key generation functionality the Kernel module may query the SO module to generate a Master Secret Key 201. The SO module may generate the Master secret key 202, for example, the Master secret key may be randomly generated using, for example, an underlying system Cryptographically Secure random Number Generator or a Cryptographically Secure Pseudo-random Number Generator (CSPRNG). The SO module may then also secure the Master secret key by encrypting the Master secret key 203, for example, if the SO module includes a Trusted Execution Environment (TEE), then the master secret key may be encrypted using the TEE's key such that only the TEE is able to subsequently use the master secret key. The secured Master secret key may then subsequently be transmitted or passed to the Kernel module 204, which may then store the encrypted Master secret key 205.

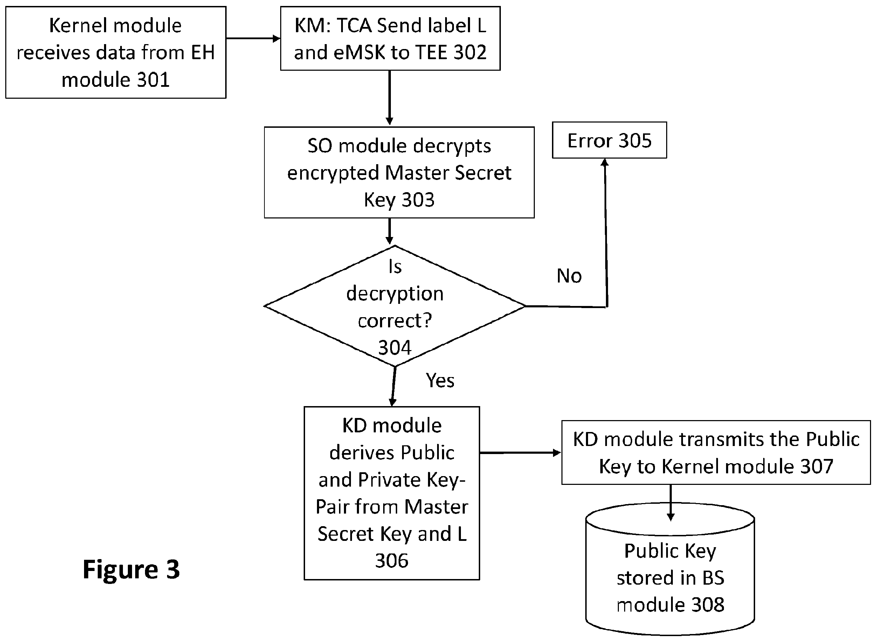

With reference to Figure 3, the operation of the asset key-pair derivation will now be described. To perform this operation and provide the asset key-pair derivation functionality, the Kernel module may receive data 301 from the EH module in order to create an asset key-pair, wherein the data may include one or more of information associated with the asset, including but not limited to asset's name abbreviation, owner identifier, fractionalisation type, etc. The Kernel module may then transmit the received data along with the relevant encrypted Master secret key to the SO module 302. The received data may be concatenated using a delimitator (e.g., '/') and the concatenated data along with the encrypted Master secret key may be transmitted to the TEE of the SO module. The SO module attempts to decrypt the encrypted Master secret key 303 and determines if the decryption was successful 304. If the decryption was not successful an error is output by the system 305. If the decryption of the encrypted Master secret key was successful then the SO module leverages the functionalities provided by the KD module to derive a private and public key-pair for the asset based on the Master secret key and concatenated data 306. For example, the KD module may deterministically derive a hierarchy of keys from the initial Master secret key through repeated applications of a message authentication code method, including but not limiting to keyed-Hash Message Authentication Code (HMAC), giving as input the components of the concatenated data. The public key is subsequently transmitted from the KD module to the Kernel module 307 which, on receipt of the public key, generates a query for the EH module to store the public key in the Backend Storage module data store.

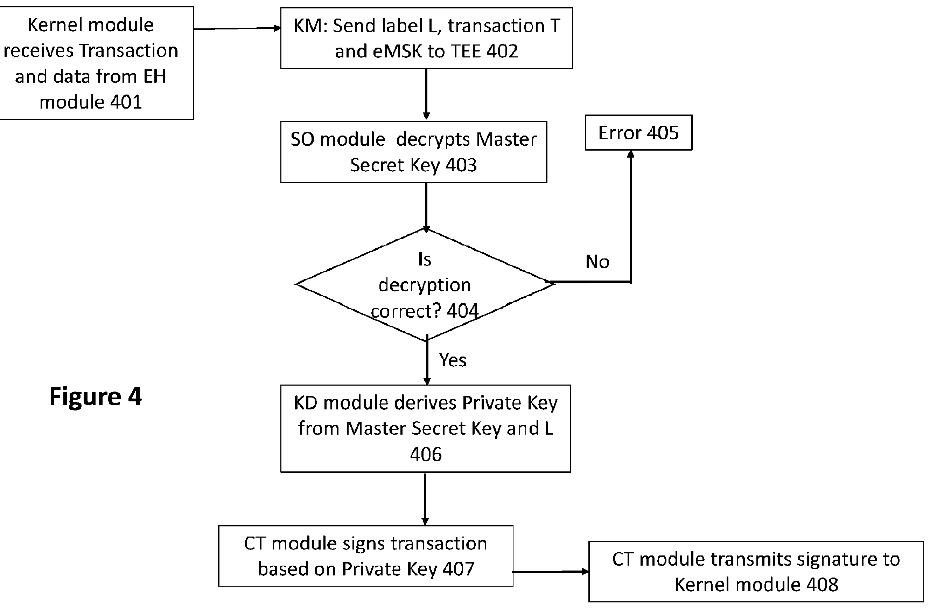

With reference to Figure 4, the operation of the Transaction signing will now be described. To perform this operation and provide the Transaction signing functionality the Kernel module receives from the EH module a transaction T (for example, the transaction may be to issue a digital asset A) along with data to derive the key-pair of the digital asset related to the transaction (for example, the data may include a name abbreviation of digital asset A) and transmits transaction T and the data, together with the encrypted Master secret key, to the SO module 402. The received data may be concatenated using a delimitator (e.g., '/') wherein the transaction T, the concatenated data and the encrypted Master secret key may be transmitted to the TEE of the SO module.

The SO module attempts to decrypt the encrypted Master secret key 403 and determines if the decryption was successful 404. If the decryption was not successful an error is output by the system 405. If the decryption of the encrypted Master secret key was successful then the SO module leverages the functionalities provided by the KD module to derive the private key for the digital asset based on the Master secret key and the concatenated data 406.

The Cryptographic Toolbox module is then utilised to sign the transaction T, that is to produce a signature S of T, based on the derived private key 407 and the signature S is transmitted to the Kernel module which subsequently forwards it to the EH module. For example, the signature S of a transaction T may be generated by taking the hash value of transaction T, or the result of transaction T, and encrypting it with the derived private key.

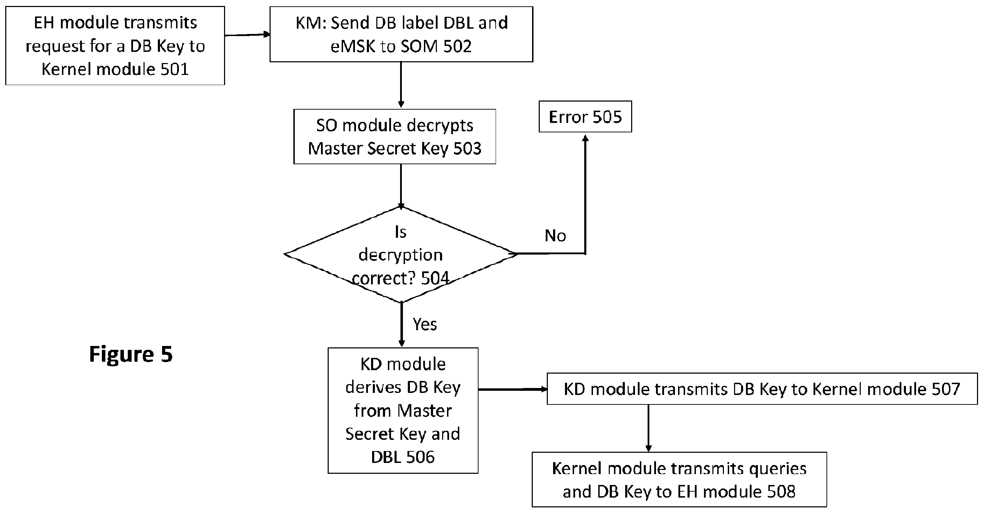

With reference to Figure 5, the operation of Database (DB) key derivation will now be described. To perform this operation and provide the DB key derivation functionality the EH module transmits a request for a DB key to the Kernel module in order to complete a query 501. The Kernel module subsequently transmits the data required to create the DB key, wherein the data may include DB's information (e.g., name), together with the encrypted Master secret key, to the SO module 502. The received data may be concatenated using a delimitator (e.g., '/') wherein the concatenated data and the Master secret key are transmitted to the SO module, or to the TEE of the SO module

The SO module attempts to decrypt the encrypted master secret key 503 and determines if the decryption was successful 504. If the decryption was not successful an error is output by the system 505. If the decryption of the encrypted Master secret key was successful then the SO module leverages the functionalities provided by the KD module to derive the DB key for the underlying symmetric encryption scheme based on the Master secret key and the concatenated data 506. The underlying symmetric encryption may include an encryption scheme which is used by the data store to encrypt and decrypt data, wherein the key used to encrypt data is the same as the key used to decrypt data.

The DB key is transmitted from the KD module to the Kernel module 507 which subsequently transmits queries that require encryption/decryption along with the DB key to the EH module 508.

As described hereinabove, the Backend Storage module may maintain a signed hash value of the entire dataset, for example, of the tokens and associated data entities describing the digital assets, within the data store. The hash value may be computed using a homomorphic hash function, which advantageously enables synchronicity between tokens and associated data entities, such that whenever an action, such as an update operation, modifies a token (or data entity), a corresponding update operation is issued on the corresponding data entity (or token).

A homomorphic hash function is a hash function that, given the hash H(x) of an input x and an update x' of the input, enables the hash H(x') of the new input to be determined, without having to re-determine the entire hash from scratch.

One example of a homomorphic hash function is the Lattice hash (LtHash) function based on a Lattice mathematical structure. In LtHash, the hash is defined on inputs that can be split into individually indexed blocks, so that the underlying hash takes as input the unique index along with the block data to produce the hash output.

Thus, as the overall hash of the input is effectively determined based on the hashes of the individual blocks in the input, for example, the sum of the hash of each individual block in the input, then an action to update, modify, add, remove or change an individual block in the data can be reflected in the hash by, for example, adding or subtracting the hash of the individual blocks from the overall hash.

LtHash is based on an underlying extendable output function (XOF) function h, which is a cryptographic hash that can output arbitrarily long outputs, whereas a typical hash function has fixed length outputs. A function from the BLAKE2 family, e.g. BLAKE2X, or a function from the SHA-3 family, e.g. SHAKE128, SHAKE256, with an appropriate choice of parameters, may be used to instantiate the underlying XOF h on which the LtHash function can be based.

For the LtHash function, integers n, d are set at a value that is greater than 0 and XOF h is set such that the output has a length nd. q may then be set as $q=2^d$, such that the output of the XOF function can be viewed as a vector of n components/elements. In this example, n is the number of components/elements in the output vector, d is the dimension of each component/element in bits, and q is the number of possible values for each component/element. For example, an $LtHash_{1024,16}$ outputs a vector of 1024 elements wherein each element has a size of 16 bits. Therefore, in this example, each component/element in the vector may have a value between 0 and 65535, inclusive. However, as will be appreciated the values of n, d and q may be set to any integer values as required for the hash function utilised.

Then, an input of $x_1,x_2,...,x_k$, to the $LtHash_{n,d}$

function can be defined as:

$$\mathrm{LtHash}_{n,d}(x_1, x_2, \ldots, xk) = \sum h(x_i) \bmod q$$

We remark that $\mathrm{LtHash}(x_1, x_2, \ldots x_k, x_{k+1}) = \mathrm{LtHash}(x_1, x_2, \ldots, x_k) + \mathrm{LtHash}(x_{k+1})$, where the + operation is interpreted as the component-wise vector addition modulo q.

The homomorphic hash function, e.g. LtHash, is utilised to advantageously maintain synchronicity between data entities and the associated token. This is achieved by applying the hash function to each data entity in order to generate an associated token for each data entity. The data entities being stored in a first dataset and the associated tokens being stored in a second dataset. The datasets forming a dual storage system in one or more data stores. The hash function can then be applied to the whole data entity dataset which will output the same value as performing the sum modulo q to the values contained in token dataset, if the two datasets are synchronised. Thus, if an operation is performed on the data entity dataset but not on token dataset (or vice-versa) an inequality between the cumulated homomorphic hash values (that is applying LtHash on the data entity dataset and performing the sum of the values (modulo q) in the token dataset) of the two datasets can be determined or identified which will highlight a lack of synchronicity of the system and indicate an error has occurred.

As mentioned, the above system advantageously provides both storage and execution environments for the management of data entities and their associated digital tokens and, in particular, to providing at least a dual storage system for storing the data entities and their associated tokens along with the ability to synchronise operations on the data entities and the associated tokens by using advanced cryptographic protocols that utilise homomorphic hashing.

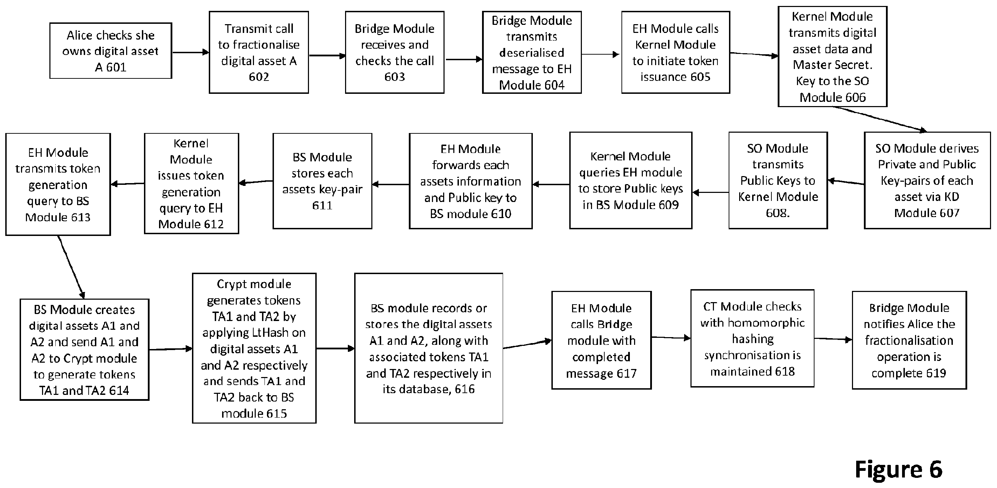

An example of the use of the system of the present invention will now be described, with reference to Figure 6, in relation to a financial digital asset fractionalisation operation inside a TCA.

In this example, the TCA owner Alice owns a digital entity that corresponds to, or describes, a digital asset A which has an associated token T_A. Alice subsequently decides to create two new digital assets, A1 and A2, by splitting, or fractionalising, the current digital asset A, which will also require the creation of two new associated tokens, T_A1 and T_A2, respectively. The present invention advantageously checks that the tokens and digital assets are synchronised and that consistency is maintained between the digital assets and tokens for the transaction.

Digital asset A, owned by Alice, may be stored in the Backend Storage module data store, for example, in a database, as a data entity. The associated digital token (e.g. cryptographic homomorphic hash) is also stored in the Backend Storage module in the database, such that the Backend Storage module implements a dual storage system for the data entity describing the digital asset A and the associated digital token. As will be appreciated, the dual storage system of the Backend Storage module may be implemented by other data store means.

In step 601, Alice can check, for example, by using a client application (e.g., a mobile application) for her TCA, that she owns the digital asset A.

In step 602, Alice decides to split, or fractionalise, the digital asset A into two new digital assets, A1 and A2 and transmits a call to fractionalise the digital asset A to the TCA.

If the asset A is stored or maintained in one or more external data management entities then the TCA may request a status update of the asset A from the one or more external data management entities to ensure they are consistent and have symmetry. Or the TCA may continuously or periodically request or receive updates from the one or more external data management entities for the data entities and/or associated tokens stored by the TCA which are also stored or maintained in the one or more external data management entities.

The new digital assets A1 and A2 may be of the same digital asset class or different digital asset classes to the original digital asset class of digital asset A. A digital asset class may be defined by a set of information, metadata and/or policies that uniquely identifies an asset, for example, all the digital assets representing XYZ stock in the system are identified with a specific digital asset class. If this digital asset is subject to fractionalisation it may be necessary to identify the new digital asset with a different digital asset class, that may or may not derive information, metadata and/or policies from the original one, and therefore expanding or further defining the digital asset class with additional fractionalisation information.

The digital asset class of original digital asset A may be previously defined by Alice on the creation of the original digital asset A via a custom data schema. The custom data schema may be a file, such as an Excel file, that defines the class of the digital asset. For example, if the digital asset relates to a financial stock investment then the custom data schema may include details indicative of one or more of the International Securities Identification Number (ISIN) of the stock, a ticker symbol which is typically an abbreviation used to uniquely identify publicly traded shares of a particular stock on a particular stock market, an instrument e.g. a stock, name e.g. the full name of the company, and a sector e.g. the field in which the company operates. As an example, the original digital asset A may be defined by the custom data schema of:

- Asset A: IT004892JF, AAA, STOCK, A COMPANY, ENERGY.

If the new digital assets are in the same class as the original digital asset A, Alice may submit, for example, via an Application Program Interface (API) of the client application, a data entity split, or fractionalise, call to the TCA API. The call may include the complete custom data schema plus a parameter indicative of a denominated fraction for the split, e.g. 0.5 if an equal split is requested for each of the two new digital assets A1 and A2. Alternatively, the system may automatically generate and use the data schema of the original data asset A with an additional parameter indicative of the denominated fraction for the split provided by Alice in the call. Using the custom data schema example above, the data schema for the new digital assets of the same digital class may be defined as:

- Asset A1: IT004892JF, AAA, STOCK, A COMPANY, ENERGY, 0.5.
- Asset A2: IT004892JF, AAA, STOCK, A COMPANY, ENERGY, 0.5.

Alternatively, if the new digital assets A1 and A2 are not of the same digital asset class as the original digital asset A then Alice may submit a data schema change call to the TCA API. Alice may provide the custom data schema for the new digital assets A1 and A2 or the system may prompt Alice to subsequently provide the custom digital schema for the digital class of the new digital assets A1 and A2. For example, if Alice wants to extract dividend rights from digital asset A, Alice may provide a custom data schema that includes the ISIN, ticker, instrument, name, sector, base_security, and dividend_rights, wherein base_security identifies if the digital asset represents the security or not, and dividend_rights identifies if the asset has the dividend rights or not, where base_security and dividend_rights are mutually exclusive. In this example, custom data schema may be:

- Asset A1: IT004892JF, AAA, STOCK, A COMPANY, ENERGY, TRUE, FALSE.
- Asset A2: IT004892JF, AAA, STOCK, A COMPANY, ENERGY, FALSE, TRUE.

In step 603, the Bridge module receives the call, wherein the call includes a message, and performs operations to check the authenticity and validity of the call. For example, authenticity may be checked through well-known standards including, but not limited to, keyed-Hash Message Authentication Code (HMAC) or Digital Signature, which make use of encryption, with the private key, to sign the hash value of the call. Validity may be checked through the lifetime of the Application Programming Interface (API) key used to execute the call.

In step 604, the Bridge module deserialises the message included in the call, wherein deserialisation of the message included in the call relates to the act of converting structured data encoded in specific formats including, but not limited to, JavaScript Object Notation (JSON) or Protocol buffers (Protobuf), back to bytes representing a specific object in the system, and transmits the deserialised message to the Event Handler module.

In step 605, the Event Handler module, on receiving the deserialised message, calls the Kernel module to initiate the generation and issuance of the new digital tokens TA1 and TA2.

In step 606, the Kernel module extracts data relating to the digital assets A1 and A2 from the deserialised message and transmits the extracted data relating to the digital assets A1 and A2 along with a Master secret key, which is unique to the TCA, to the SO module, such that the SO module can derive an asset key-pair for each of the digital assets A1 and A2.

In step 607, the SO module leverages the functionalities provided by the KD module, e.g. the KDF, in order to derive a private and public key-pair for each digital asset A1 and A2 based on the Master secret key.

In step 608, the SO module transmits the public key for each of the digital assets A1 and A2 to the Kernel module.

In step 609, the Kernel module generates a call or query that is transmitted to the EH module to store the derived public key for each digital asset in the BS module's data store, e.g. database.

In step 610, the EH module on receiving the call or query from the Kernel module transmits the digital assets A1 and A2 information along with the derived public key for each of the digital assets A1 and A2 to the BS module.

In step 611, the BS module stores the derived public key for each digital asset in the BS module's data store, e.g. database.

In step 612, the Kernel module issues a digital token generation query, through the use of the Transaction module which creates a transaction related to the digital token creation wherein the transaction may be signed by the SO module using the private key of the specific digital asset that is extracted using the KD module. The digital token generation query may include the specified custom data schema, either automatically using the previous custom data schema or a custom data schema provided by Alice, to the EH module which is to be performed by the BS module.

In step 613, the EH module transmits the token generation query to the BS module.

In step 614, the BS module's database creates the digital assets A1 and A2 with the applicable data schema and transmits the digital assets A1 and A2 to the Crypt module to generate tokens TA1 and TA2.

In step 615, the Crypt module generates the tokens TA1 and TA2 by applying the LtHash function to the digital assets A1 and A2 respectively, and transmits the generated tokens TA1 and TA2 to the BS module.

In step 616, the BS module then records, or stores, the digital assets A1 an A2 along with the associated tokens TA1 and TA2 respectively in the respective dataset of the dual storage system in the one or more data stores. The data recorded, or stored, may further be encrypted with a Database (DB) key generated by the KD module. The DB key may be used for encrypting/decrypting data stored within the specific data store (e.g. a database), such that only the actors able to derive the DB key will be able to see plain data contained in the data store.

In step 617, the EH module may subsequently call the Bridge module with an operation completed message, wherein the operation competed message indicates that the BS module has created and stored the respective digital assets and associated tokens.

In step 618, the CT module checks with homomorphic hashing that synchronisation has been maintained between (A, A1, A2) and (T, TA1, TA2). In this example, the check may be performed in order to ensure digital asset A and token T have been removed from the data store and new digital assets A1 and A2, along with the respective new tokens TA1 and TA2 have been added to the data store. This check may be performed by removing digital asset A and associate token T from the data store along with removing them from the previous homomorphic hash, adding new digital assets A1 and A2 along with the respective new tokens TA1 and TA2 to the data store, and determining that the obtained homomorphic hash value based on the modified digital assets dataset is equal to the sum of the homomorphic hash value of the token dataset.

Based on asset A, for example using a corresponding reference pointer corresponding to asset A, the TCA may perform, or initiate, an operation on one or more external data management entities that also comprise asset A to fractionalise asset A in order to maintain symmetry between the data store of the TCA and the data store of the one or more external data management entities. For example, the TCA may transmit one or more instructions, wherein the instructions may include the necessary data and information relating to the modified data assets, to the one or more external data management entities to perform the necessary operations to update the data store of the one or more external data management entities.

In step 619, the Bridge module notifies Alice that the operation is successfully completed, and that Alice now owns A1 and A2, with tokens TA1 and TA2.

The above example related to one of numerous different applications of the present invention, in which the system advantageously provides both storage and execution environments for the management of data entities and their associated tokens and, in particular, to providing at least a dual storage system for storing the data entities and their associated tokens along with the ability to synchronise operations on the digital entities and the associated tokens by using advanced cryptographic protocols that utilise homomorphic hashing. Other examples of applications of the present invention may include, for example, digitalisation and tokenisation of real assets, transfer of ownership of a digital asset exploiting their token representation together with their proof of ownership/transfer, updating digital asset data described in a data entity, transfer of ownership of a right embedded in a digital asset described by a data entity, ownership and privacy of personal data contained in a data entity.

The system may also provide the functionality to reply to aggregate queries posed by actors, such as other TCAs or regulated entities participating in the system, that do not have access to the data store, e.g. the database, in a secure and proven manner. By implementing a dual storage system for the digital assets and associated tokens, along with maintaining synchronicity between the digital assets and associated tokens using homomorphic hashing, the data can be considered to be correct which enables aggregate queries to be handled with confidence. For example, an aggregate query may include: "return the average value of a plurality of numerical entries of a data entity".

However, as will be appreciated, any type of aggregate query may be received by the system, for example, the aggregate query may include one or more of average, median, sum, min, max, and count.

The system and method of the present invention provides the technical means to verify that an answer to the aggregate query is computed using only correct data, wherein the answer of the aggregate query is obtained using actual data and not being the result of fictional data. This is important as the actor posing the query does not necessarily have access to the actual data stored inside the data store, so, without the system and method presented in this invention the actor would have to trust the answer without any actual proof that the answer is correct and reliable.

A data owner is defined as the owner of one or more digital entities in one or more of the datasets contained in the backend storage module.

The service provider is defined as the query processor and one or more further sub-modules of the Crypt module that provide the functionality to compute the answer to an aggregate query, along with additional information that is used for verifying the answer. The additional information is computed using the dataset plus other information. The additional information may include Pedersen commitments and/or the signature of a Merkle tree's root, and the other information may include the cryptographic material (e.g., a private key) and/or parameters required to compute the Pedersen commitments and/or the signature.

An external client issuing an aggregate query to the system typically trusts the data owner and, in particular, the external client typically trusts any message signed with the data owner's public key.

The external client does not necessarily need to trust the service provider however, the data owner will typically trust the service provider to maintain the secrecy and privacy of the dataset(s) and to correctly answer the query as this can be verified by the external client.

Therefore, the backend storage can be run on, or implemented on, a partially trusted server, as long as the cryptographic material for encrypting/decrypting data are kept safe, that is the Crypt module is implemented on, or run in, a trusted server or partially trusted server.

A partially trusted server means that the system and method of the present invention can withstand data leakage from the server, since the data is encrypted.

The data owner maintains a public/private key-pair (pk, sk) derived from a secure digital signature scheme Sig. The public parameters of the Haber-Pedersen protocol may include one or more of the public key pk of the data owner, one or more parameters computing a Pedersen commitment (e.g., generators g and h of the group defined over the points of the elliptic curve and randomly chosen for every commitment), a hash function h, a zero-knowledge range proof ZKRP, and the signature scheme Sig.

The interaction between the data owner, external client and service provider interact will now be described.

The data owner takes as input a set A of unsorted data items, for example, $A = (a_1,..., a_n)$ where $a_1$ to $a_n$ are digital assets in the dataset of the Backend Storage module.

Using a Pedersen commitment scheme, it computes the commitments $c_1 = commit(a_1, r_1),..., c_n = commit(a_n, r_n)$, where $r_1$ to $r_n$ are a fresh random value required to compute the commitments $c_1$ to $c_n$.. Then, it computes a Merkle hash tree with commitments $c_1$ to $c_n$ as leaf nodes of the tree, wherein the binary Merkle hash tree is recursively built starting from the hashes of the commitments all the way to the root. The root hash of the tree is denoted by hr and it is signed by the data owner using Sig, obtaining sr.

The service provider has access to the data items contained in a dataset $A$. The additional information that the service provider receives via a secure channel from the data owner, is the Pedersen commitments $(c_1,..., c_n)$, the random values $(r_1,..., r_n)$ used for computing such commitments, and the signature sr.

Therefore, in response to the aggregate query from the external client received by the service provider, the service provider, having as inputs the public parameters (for example, generators g and h of the group defined over the points of the elliptic curve, and randomly chosen for every commitment), the dataset A, the auxiliary information provided by the data owner (for example, the Pedersen commitments and random values) and the aggregate query itself, determines an answer to the received aggregate query along with a corresponding proof. Both the determined answer and the corresponding proof may then be transmitted to the external client.

If the aggregate query related to a Sum, the service provider determines an answer based on the sum of all data items in dataset A. The proof is determined based on the sum of all the random values used for computing the Pedersen commitments and the signature hr.

If the aggregate query related to Min/Max, the service provider determines an answer as $a_j=min(a_1,...,a_n)$ or $a_j=max(a_1,...,a_n)$ respectively. In order to determine the proof, the service provider performs the following operations:

(i) for each data item $a_i$ in A, with i different from j, the service provider determines the zero-knowledge proof for $a_j \geq a_i$: $p_i = ZKRP(a_i, a_j)$ in the case where data items are unsorted, however, if the data items were sorted then the proof may be simplified; and

(ii) along with the zero-knowledge proofs, the service provider transmits to the client the commitments $c_1,...,c_n$, the information for opening commitment $c_j$, e.g. the random value $r_j$ relating to $c_j$, and the signature hr.

On receiving at the external client the answer and proof determined by the service provider in response to the aggregate query, the external client may verify the received answer.

If the aggregate query related to a Sum, the external client performs the following verifications:

(i) verifies whether the following equation holds $g^s h^{r'} = \prod c_i$ wherein s is a random scalar, and g are group elements, as defined in the definition of the Pedersen commitment; and

(ii) computes a Merkle hash tree with $c_1,..., c_n$ as leaf nodes and verifies the signature sr with the public key of the data owner.

If the aggregate query related to Min/Max, the external client performs the following verifications:

(i) checks each proof $p_i$; and

(ii) opens the commitment $c_j$ (corresponding to the max data item), builds a Merkle hash tree from the commitments and verifies the signature sr.

In the foregoing embodiments and examples, features described in relation to one embodiment and/or example may be combined, in any manner, with features of a different embodiment and/or example in order to provide a more effective system and method for the consistency and correctness of storage and database management operations among data entities and their hashed key values. Note that, the above description is for illustration only and other embodiments, examples and variations may be envisaged without departing from the scope of the invention as defined by the appended claims.

**Claims**

1. A computing device comprising:

an input/output module (102) configured to manage interactions with one or more entities (105, 106, 107), wherein the input/output module comprises hardware configured to establish and/or maintain the interactions with the one or more entities;
a backend storage module (104) comprising a dual storage system, wherein the dual storage system comprises at least one data store (113) comprising a dataset of data representing data entities and a dataset of associated digital tokens;
a crypt module (103) comprising secure hardware and software configured to perform cryptographic homomorphic hashing to generate one or more digital tokens associated with respective data entities (105, 106, 107); and wherein the input/output module (102) is further configured to receive a call from an entity to perform an action in respect of a data entity;
the backend storage module (104) is configured to perform the action to the data entity;
the crypt module (103) is configured to apply a cryptographic homomorphic hashing function to the actioned data entity to generate the associated digital token;
the backend storage module (104) is further configured to store the actioned data entity and the generated associated digital token in the respective dataset in the dual storage system; and
the crypt module (103) is further configured to determine synchronicity between the data entity dataset and the digital token dataset based at least in part on the homomorphic hashing function.

2. The computing device of claim 1, in which the dual storage system is associated with one or more external data management entities, wherein one or more of the external data management entities store corresponding data entities and/or associated digital tokens, the one or more of the external data management entities optionally including one or more of external DLTs, external legacy systems, other computing devices, external databases, and/or external servers.

3. The computing device of any one of the preceding claims, in which the one or more entities (105, 106, 107) include one or more of external devices, external clients, external/internal applications and external/internal data stores.

4. The computing device of any one of the preceding claims, in which an interaction includes one or more of network formatting between two or more computing devices, transmitting data and receiving data and/or wherein the computing device is a Treasury and Custody Account system.

5. The computing device of any one of the preceding claims, in which the action comprises one or more of:

creating a new data entity,
amending an existing data entity,
removing an existing data entity, fractionalising a digital asset described in a data entity,
digitalisation and tokenisation of real assets described in a data entity,
transfer of ownership of a digital asset described in a data entity,
updating digital asset data described in a data entity, or
transfer of ownership of a right embedded in a digital asset described by a data entity, or ownership and privacy of personal data contained in a data entity.

6. A method comprising:

receiving a call from an entity to perform an action in respect of a data entity;
performing the action to the data entity;
applying a homomorphic hashing function to the actioned data entity to generate an associated digital token;
storing the actioned data entity and the generated associated digital token in a dual storage system, the dual storage system comprising at least one data store comprising a dataset of data representing data entities and a dataset of associated digital tokens; and
determining synchronicity between the data entity dataset and the digital token dataset based at least in part on the homomorphic hashing function.

7. The method of claim 6, in which the dual storage system is associated with one or more external data management entities, wherein one or more of the external data management entities store corresponding data entities and/or associated digital tokens,
the method further comprising:
transmitting a request to the one or more of the external data management entities to initiate an update of the actioned data entity and/or associated digital token, based at least in part on the data representing the actioned data entity.

8. The method of claim 7, further comprising:

requesting a status update for the data entity and/or associated digital token to the one or more of the external data management entities storing and/or performing one or more actions on the data entity and/or associated digital token, based at least in part on the data representing the data entity.

9. The method of any one of claims 6 to 8, in which the method further comprises:

maintaining a homomorphic hash value of at least the dataset of data entities; subtracting a homomorphic hash of the existing data entity from the maintained homomorphic hash value of the dataset of data entities; and adding a homomorphic hash of the actioned data entity to the maintained homomorphic hash value of the dataset of data entities.

10. The method of any one of claims 6 to 9, further comprising:

maintaining a homomorphic hash value of at least the dataset of data entities; in which determining synchronicity between the data entity dataset and the digital token dataset comprises:

calculating a sum of the digital token dataset based on modulo arithmetic; comparing the determined homomorphic hash value of the dataset of data entities to the sum of the digital token dataset; and determining synchronicity if the determined homomorphic hash value of the data entity dataset matches the sum of the digital token dataset.

11. The method of any one of claim 6 to 10, in which if synchronicity is not determined, the method further comprises:

analysing the data entity dataset and/or the digital token dataset to identify one or more data entities and/or digital tokens that has caused the lack of synchronicity; and correcting the identified one or more data entities and/or digital tokens.

12. The method of any one of claim 6 to 11, further comprising:
deriving a Master secret key, wherein the Master secret key is unique and generated based on a Cryptographically Secure random Number Generator or a Cryptographically Secure Pseudo-random Number Generator.

13. The method according to claim 12, in which performing the action further comprises:

deriving a data entity private and public key pair based on the derived Master secret key and data relating to the data entity; and storing the derived public key in the data store; and further comprising: deriving a Database key based on the Master secret key and data relating to the data store; and encrypting the data store with the Database key.

14. The method of any one of claims 6 to 13, further comprising:
selecting a communication protocol for an interaction with an entity; and/or further comprising:
checking the authenticity and/or validity of the received call to perform an action in respect of a data entity; and/or

further comprising:

deriving a homomorphic hash value of the dataset of data entities and the dataset of associated digital tokens; and signing the derived homomorphic hash value of the dataset of data entities and the dataset of associated digital tokens; and/or

further comprising:

receiving an aggregate query from an actor; determining an answer to the aggregate query based at least in part on the dataset of data entities; determining a cryptographic proof of the determined answer to the aggregate query; and transmitting the answer to the aggregate query and the determined cryptographic proof to the actor, wherein the determined cryptographic proof comprises one or more cryptographic commitments and/or cryptographic hashes.

15. A computer program product comprising computer readable executable code for implementing any one of method claims 6 to 14.

**Patentansprüche**

1. Eine Rechenvorrichtung, die Folgendes beinhaltet:

ein Eingabe-/Ausgabemodul (102), das konfiguriert ist, um Interaktionen mit einer oder mehreren Entitäten (105, 106, 107) zu verwalten, wobei das Eingabe-/Ausgabemodul Hardware beinhaltet, die konfiguriert ist, um die Interaktionen mit der einen oder den mehreren Entitäten herzustellen und/oder aufrechtzuerhalten;

ein Backend-Speichermodul (104), das ein duales Speichersystem beinhaltet, wobei das duale Speichersystem mindestens einen Datenspeicher (113) beinhaltet, der einen Datensatz von Daten, die Datenentitäten darstellen, und einen Datensatz von assoziierten digitalen Token beinhaltet;

ein Kryptomodul (103), das sichere Hardware und Software beinhaltet und konfiguriert ist, um kryptographisches homomorphes Hashing durchzuführen, um ein oder mehrere digitale Token zu erzeugen, die mit jeweiligen Datenentitäten (105, 106, 107) assoziiert sind; und wobei

das Eingabe-/Ausgabemodul (102) ferner konfiguriert ist, um einen Aufruf von einer Entität zum Durchführen einer Aktion in Bezug auf eine Datenentität zu empfangen; das Backend-Speichermodul (104) konfiguriert ist, um die Aktion an der Datenentität durchzuführen;

das Kryptomodul (103) konfiguriert ist, um auf die Datenentität, an der die Aktion vorgenommen wurde, eine kryptographische homomorphe Hashing-Funktion anzuwenden, um das assoziierte digitale Token zu erzeugen;

das Backend-Speichermodul (104) ferner konfiguriert ist, um die Datenentität, an der die Aktion vorgenommen wurde, und das erzeugte assoziierte digitale Token in dem jeweiligen Datensatz in dem dualen Speichersystem zu speichern; und

das Kryptomodul (103) ferner konfiguriert ist, um Synchronität zwischen dem Datensatz von Datenentitäten und dem Datensatz von digitalen Token mindestens teilweise basierend auf der homomorphen Hashing-Funktion zu bestimmen.

2. Rechenvorrichtung gemäß Anspruch 1, wobei das duale Speichersystem mit einer oder mehreren externen Datenverwaltungsentitäten assoziiert ist, wobei eine oder mehrere der externen Datenverwaltungsentitäten entsprechende Datenentitäten und/oder assoziierte digitale Token speichern, wobei die eine oder mehreren der externen Datenverwaltungsentitäten optional eines oder mehrere von externen DLTs, externen Legacy-Systemen, anderen Rechenvorrichtungen, externen Datenbanken und/oder externen Servern umfassen.

3. Rechenvorrichtung gemäß einem der vorhergehenden Ansprüche, wobei die eine oder die mehreren Entitäten (105, 106, 107) eines oder mehrere von externen Vorrichtungen, externen Clients, externen/internen Anwendungen und externen/internen Datenspeichern umfassen.

4. Rechenvorrichtung gemäß einem der vorhergehenden Ansprüche, wobei eine Interaktion eines oder mehrere von Netzwerkformatierung zwischen zwei oder mehr Rechenvorrichtungen, Übertragen von Daten und Empfangen von Daten umfasst und/oder wobei die Rechenvorrichtung ein Treasury- und Custody-Account-System ist.

5. Rechenvorrichtung gemäß einem der vorhergehenden Ansprüche, wobei die Aktion eines oder mehrere von Folgendem beinhaltet:

Erstellen einer neuen Datenentität,
Ändern einer existierenden Datenentität,
Entfernen einer existierenden Datenentität,
Fraktionieren eines digitalen Assets, das in einer Datenentität beschrieben ist,
Digitalisierung und Tokenisierung von realen Assets, die in einer Datenentität beschrieben sind,
Transfer des Eigentums an einem digitalen Asset, das in einer Datenentität beschrieben ist,
Aktualisieren von digitalen Assetdaten, die in einer Datenentität beschrieben sind, oder
Transfer des Eigentums an einem Recht, das in einem digitalen Asset eingebettet ist, das durch eine Datenentität beschrieben ist, oder
des Eigentums und des Datenschutzes von persönlichen Daten, die in einer Datenentität enthalten sind.

6. Ein Verfahren, das Folgendes beinhaltet:

Empfangen eines Aufrufs von einer Entität zum Durchführen einer Aktion in Bezug auf eine Datenentität;
Durchführen der Aktion an der Datenentität;
Anwenden einer homomorphen Hashing-Funktion auf die Datenentität, an der die Aktion vorgenommen wurde, um ein assoziiertes digitales Token zu erzeugen;
Speichern der Datenentität, an der die Aktion vorgenommen wurde, und des erzeugten assoziierten digitalen Tokens in einem dualen Speichersystem, wobei das duale Speichersystem mindestens einen Datenspeicher beinhaltet, der einen Datensatz von Daten, die Datenentitäten darstellen, und einen Datensatz von assoziierten digitalen Token beinhaltet; und
Bestimmen von Synchronität zwischen dem Datensatz von Datenentitäten und dem Datensatz von digitalen Token mindestens teilweise basierend auf der homomorphen Hashing-Funktion.

7. Verfahren gemäß Anspruch 6, wobei das duale Speichersystem mit einer oder mehreren externen Datenverwaltungsentitäten assoziiert ist, wobei eine oder mehrere der externen Datenverwaltungsentitäten entsprechende Datenentitäten und/oder assoziierte digitale Token speichern, wobei das Verfahren ferner Folgendes beinhaltet: Übertragen einer Anforderung an die eine oder die mehreren der externen Datenverwaltungsentitäten, um eine Aktualisierung der Datenentität, an der die Aktion vorgenommen wurde, und/oder des assoziierten digitalen Tokens mindestens teilweise basierend auf den Daten, die die Datenentität, an der die Aktion vorgenommen wurde, darstellen, zu initiieren.

8. Verfahren gemäß Anspruch 7, das ferner Folgendes beinhaltet:
Anfordern einer Statusaktualisierung für die Datenentität und/oder das assoziierte digitale Token an die eine oder die mehreren der externen Datenverwaltungsentitäten, die eine oder mehrere Aktionen an der Datenentität und/oder dem assoziierten digitalen Token speichern und/oder durchführen, mindestens teilweise basierend auf den Daten, die die Datenentität darstellen.

9. Verfahren gemäß einem der Ansprüche 6 bis 8, wobei das Verfahren ferner Folgendes beinhaltet:

Aufrechterhalten eines homomorphen Hash-Werts mindestens des Datensatzes von Datenentitäten;
Subtrahieren eines homomorphen Hash der existierenden Datenentität von dem aufrechterhaltenen homomorphen Hash-Wert des Datensatzes von Datenentitäten; und
Hinzufügen eines homomorphen Hash der Datenentität, an der die Aktion vorgenommen wurde, zu dem aufrechterhaltenen homomorphen Hash-Wert des Datensatzes von Datenentitäten.

10. Verfahren gemäß einem der Ansprüche 6 bis 9, das ferner Folgendes beinhaltet:

Aufrechterhalten eines homomorphen Hash-Werts mindestens des Datensatzes von Datenentitäten;
wobei das Bestimmen von Synchronität zwischen dem Datensatz von Datenentitäten und dem Datensatz von digitalen Token Folgendes beinhaltet:

Berechnen einer Summe des Datensatzes von digitalen Token basierend auf Modulo-Arithmetik;
Vergleichen des bestimmten homomorphen Hash-Werts des Datensatzes von Datenentitäten mit der Summe des Datensatzes von digitalen Token; und

Bestimmen von Synchronität, wenn der bestimmte homomorphe Hash-Wert des Datensatzes von Datenentitäten mit der Summe des Datensatzes von digitalen Token übereinstimmt.

11. Verfahren gemäß einem der Ansprüche 6 bis 10, wobei, wenn keine Synchronität bestimmt wird, das Verfahren ferner Folgendes beinhaltet:

Analysieren des Datensatzes von Datenentitäten und/oder des Datensatzes von digitalen Token, um ein(e) oder mehrere Datenentitäten und/oder digitale Token zu identifizieren, die den Mangel an Synchronität verursacht haben; und
Korrigieren der identifizierten einen oder mehreren Datenentitäten und/oder des/der identifizierten einen oder mehreren digitalen Token.

12. Verfahren gemäß einem der Ansprüche 6 bis 11, das ferner Folgendes beinhaltet: Ableiten eines geheimen Master-Schlüssels, wobei der geheime Master-Schlüssel eindeutig ist und basierend auf einem kryptographisch sicheren Zufallszahlengenerator oder einem kryptographisch sicheren Pseudozufallszahlengenerator erzeugt wird.

13. Verfahren gemäß Anspruch 12, wobei das Durchführen der Aktion ferner Folgendes beinhaltet:

Ableiten eines privaten und öffentlichen Datenentitätsschlüsselpaars basierend auf dem abgeleiteten geheimen Master-Schlüssel und Daten, die sich auf die Datenentität beziehen; und
Speichern des abgeleiteten öffentlichen Schlüssels in dem Datenspeicher; und
ferner beinhaltend:

Ableiten eines Datenbankschlüssels basierend auf dem geheimen Master-Schlüssel und Daten, die sich auf den Datenspeicher beziehen; und
Verschlüsseln des Datenspeichers mit dem Datenbankschlüssel.

14. Verfahren gemäß einem der Ansprüche 6 bis 13, das ferner Folgendes beinhaltet:

Auswählen eines Kommunikationsprotokolls für eine Interaktion mit einer Entität; und/oder
ferner beinhaltend:

Prüfen der Authentizität und/oder Gültigkeit des empfangenen Aufrufs zum Durchführen einer Aktion in Bezug auf eine Datenentität; und/oder
ferner beinhaltend:

Ableiten eines homomorphen Hash-Werts des Datensatzes von Datenentitäten und des Datensatzes von assoziierten digitalen Token; und

Signieren des abgeleiteten homomorphen Hash-Werts des Datensatzes von Datenentitäten und des Datensatzes von assoziierten digitalen Token; und/oder ferner beinhaltend:

Empfangen einer aggregierten Anfrage von einem Akteur;

Bestimmen einer Antwort auf die aggregierte Anfrage mindestens teilweise basierend auf dem Datensatz von Datenentitäten;

Bestimmen eines kryptographischen Nachweises der bestimmten Antwort auf die aggregierte Anfrage; und

Übertragen der Antwort auf die aggregierte Anfrage und des bestimmten kryptographischen Nachweises an den Akteur,

wobei der bestimmte kryptographische Nachweis eine oder mehrere kryptographische Verpflichtungen und/oder kryptographische Hashes beinhaltet.

15. Ein Rechnerprogrammprodukt, das rechnerlesbaren ausführbaren Code zum Implementieren eines der Verfahrensansprüche 6 bis 14 beinhaltet.

**Revendications**

1. Un dispositif informatique comprenant :

un module d'entrée/sortie (102) configuré pour gérer des interactions avec une ou plusieurs entités (105, 106, 107), le module d'entrée/sortie comprenant du matériel configuré pour établir et/ou maintenir les interactions avec les une ou plusieurs entités ; un module de stockage dorsal (104) comprenant un système de stockage double, le système de stockage double comprenant au moins un magasin de données (113) comprenant un ensemble de données constitué de données représentant des entités de données et un ensemble de données constitué de jetons numériques associés ; un module de cryptographie (103) comprenant du matériel et des logiciels sécurisés configurés pour effectuer un hachage homomorphe cryptographique afin de générer un ou plusieurs jetons numériques associés à des entités de données (105, 106, 107) respectives ; et où

le module d'entrée/sortie (102) est en outre configuré pour recevoir un appel provenant d'une entité destiné à effectuer une action en ce qui concerne une entité de données ;

le module de stockage dorsal (104) est configuré pour effectuer l'action sur l'entité de données ;

le module de cryptographie (103) est configuré pour appliquer une fonction de hachage homomorphe cryptographique à l'entité de données sur laquelle l'action a été effectuée afin de générer le jeton numérique associé ;

le module de stockage dorsal (104) est en outre configuré pour stocker l'entité de données sur laquelle l'action a été effectuée et le jeton numérique associé généré dans l'ensemble de données respectif dans le système de stockage double ; et

le module de cryptographie (103) est en outre configuré pour déterminer le synchronisme entre l'ensemble de données d'entités de données et l'ensemble de données de jetons numériques sur la base au moins en partie de la fonction de hachage homomorphe.

2. Le dispositif informatique de la revendication 1, dans lequel le système de stockage double est associé à une ou plusieurs entités de gestion de données externes, où une ou plusieurs des entités de gestion de données externes stockent des entités de données et/ou des jetons numériques associés correspondant(e), les une ou plusieurs des entités de gestion de données externes incluant facultativement un ou plusieurs éléments parmi des DLT externes, des systèmes patrimoniaux externes, d'autres dispositifs informatiques, des bases de données externes, et/ou des serveurs externes.

3. Le dispositif informatique de l'une quelconque des revendications précédentes, dans lequel les une ou plusieurs entités (105, 106, 107) incluent un ou plusieurs éléments parmi des dispositifs externes, des clients externes, des applications externes/internes et des magasins de données externes/internes.

4. Le dispositif informatique de l'une quelconque des revendications précédentes, dans lequel une interaction inclut une ou plusieurs opérations parmi le formatage réseau entre deux dispositifs informatiques ou plus, la transmission de données et la réception de données, et/ou le dispositif informatique étant un système de comptes de trésorerie et de dépôt de titres.

5. Le dispositif informatique de l'une quelconque des revendications précédentes, dans lequel l'action comprend une ou plusieurs opérations parmi :

la création d'une nouvelle entité de données,

la modification d'une entité de données existante,

la suppression d'une entité de données existante, le fractionnement d'un actif numérique décrit dans une entité de données,

la numérisation et la conversion en jetons d'actifs réels décrits dans une entité de données,

le transfert de propriété d'un actif numérique décrit dans une entité de données,

la mise à jour de données d'actif numérique décrites dans une entité de données, ou

le transfert de propriété d'un droit incorporé dans un actif numérique décrit par une entité de données, ou de propriété et de confidentialité de données personnelles contenues dans une entité de données.

6. Un procédé comprenant :

la réception d'un appel provenant d'une entité destiné à effectuer une action en ce qui concerne une entité de données ;

la réalisation de l'action sur l'entité de données ;

l'application d'une fonction de hachage homomorphe à l'entité de données sur laquelle l'action a été effectuée afin de générer un jeton numérique associé ;

le stockage de l'entité de données sur laquelle l'action a été effectuée et du jeton numérique associé généré dans un système de stockage double, le système de stockage double comprenant au moins un magasin de données comprenant un ensemble de données constitué de données représentant des entités de données et un ensemble de données constitué de jetons numériques associés ; et

la détermination du synchronisme entre l'ensemble de données d'entités de données et l'ensemble de données de jetons numériques sur la base au moins en partie de la fonction de hachage homomorphe.

7. Le procédé de la revendication 6, dans lequel le système de stockage double est associé à une ou plusieurs entités de gestion de données externes, où une ou plusieurs des entités de gestion de données externes stockent des entités de données et/ou des jetons numériques associés correspondant(e)s, le procédé comprenant en outre :

la transmission d'une demande aux une ou plusieurs des entités de gestion de données externes destinée à lancer une mise à jour de l'entité de données sur laquelle l'action a été effectuée et/ou du jeton numérique associé, sur la base au moins en partie des données représentant l'entité de données sur laquelle l'action a été effectuée.

8. Le procédé de la revendication 7, comprenant en outre :
la demande d'une mise à jour de statut pour l'entité de données et/ou le jeton numérique associé aux une ou plusieurs des entités de gestion de données externes stockant et/ou effectuant une ou plusieurs actions sur l'entité de données et/ou le jeton numérique associé, sur la base au moins en partie des données représentant l'entité de données.

9. Le procédé de l'une quelconque des revendications 6 à 8, le procédé comprenant en outre :

la conservation d'une valeur de hachage homomorphe au moins de l'ensemble de données constitué d'entités de données ;

la soustraction d'un code de hachage homomorphe de l'entité de données existante à la valeur de hachage homomorphe conservée de l'ensemble de données constitué d'entités de données ; et

l'addition d'un code de hachage homomorphe de l'entité de données sur laquelle l'action a été effectuée à la valeur de hachage homomorphe conservée de l'ensemble de données constitué d'entités de données.

10. Le procédé de l'une quelconque des revendications 6 à 9, comprenant en outre :

la conservation d'une valeur de hachage homomorphe au moins de l'ensemble de données constitué d'entités de données ;

dans lequel la détermination du synchronisme entre l'ensemble de données d'entités de données et l'ensemble de données de jetons numériques comprend :

le calcul d'une somme de l'ensemble de données de jetons numériques sur la base de l'arithmétique modulaire ;

la comparaison de la valeur de hachage homomorphe déterminée de l'ensemble de données constitué d'entités de données à la somme de l'ensemble de données de jetons numériques ; et

la détermination du synchronisme si la valeur de hachage homomorphe déterminée de l'ensemble de données d'entités de données concorde avec la somme de l'ensemble de données de jetons numériques.

11. Le procédé de l'une quelconque des revendications 6 à 10, le procédé comprenant en outre, si le synchronisme n'est pas déterminé :

l'analyse de l'ensemble de données d'entités de données et/ou de l'ensemble de données de jetons numériques pour identifier un(e) ou plusieurs entités de données et/ou jetons numériques qui ont causé l'absence de synchronisme ; et

la correction des un(e) ou plusieurs entités de données et/ou jetons numériques identifié(e)s.

12. Le procédé de l'une quelconque des revendications 6 à 11, comprenant en outre : la dérivation d'une clé secrète maîtresse, où la clé secrète maîtresse est unique et générée sur la base d'un générateur de nombres aléatoires cryptographiquement sécurisé ou d'un générateur de nombres pseudo-aléatoires cryptographiquement sécurisé.

13. Le procédé selon la revendication 12, dans lequel la réalisation de l'action comprend en outre :

la dérivation d'une paire de clés privée et publique d'entité de données sur la base de la clé secrète maîtresse dérivée et de données relatives à l'entité de données ; et le stockage de la clé publique dérivée dans le magasin de données ; et comprenant en outre :

la dérivation d'une clé de base de données sur la base de la clé secrète maîtresse et de données relatives au magasin de données ; et le chiffrement du magasin de données avec la clé de base de données.

14. Le procédé de l'une quelconque des revendications 6 à 13, comprenant en outre :

la sélection d'un protocole de communication pour une interaction avec une entité ; et/ou comprenant en outre :

le contrôle de l'authenticité et/ou de la validité de l'appel reçu destiné à effectuer une action en ce qui concerne une entité de données ; et/ou comprenant en outre :

la dérivation d'une valeur de hachage homomorphe de l'ensemble de données constitué d'entités de données et de l'ensemble de données constitué de jetons numériques associés ; et la signature de la valeur de hachage homomorphe dérivée de l'ensemble de données constitué d'entités de données et de l'ensemble de données constitué de jetons numériques associés ; et/ou comprenant en outre :

la réception d'une requête agrégée provenant d'un acteur ; la détermination d'une réponse à la requête agrégée sur la base au moins en partie de l'ensemble de données constitué d'entités de données ; la détermination d'une preuve cryptographique de la réponse déterminée à la requête agrégée ; et la transmission de la réponse à la requête agrégée et de la preuve cryptographique déterminée à l'acteur,

où la preuve cryptographique déterminée comprend un ou plusieurs engagements cryptographiques et/ou codes de hachage cryptographiques.

15. Un produit-programme d'ordinateur comprenant du code exécutable lisible par ordinateur pour la mise en œuvre de l'une quelconque des revendications de procédé 6 à 14.

Figure 1

```
┌─────────────────────┐
│  Kernel module query │
│    SO module to      │
│  generate a Master   │
│  Secret Key 201      │
└─────────────────────┘
           │
           ▼
┌─────────────────────┐
│ SO module generates  │
│    the Master        │
│  Secret Key 202      │
└─────────────────────┘
           │
           ▼
┌─────────────────────┐         ┌─────────────────────┐
│    SO module         │         │    SO module         │
│  encrypts Master     │────────▶│    transmits         │
│  Secret Key 203      │         │ encrypted Master     │
└─────────────────────┘         │  Secret Key to       │
                                 │ Kernel module 204    │
                                 └─────────────────────┘
                                            │
                                            ▼
                                 ┌─────────────────────┐
                                 │  Kernel module       │
                                 │ stores encrypted     │
                                 │  Master Secret       │
                                 │    Key 205           │
                                 └─────────────────────┘
```

**Figure 2**

**Figure 3**

- Kernel module receives data from EH module 301
- KM: TCA Send label L and eMSK to TEE 302
- SO module decrypts encrypted Master Secret Key 303
- Is decryption correct? 304
- Error 305
- KD module derives Public and Private Key-Pair from Master Secret Key and L 306
- KD module transmits the Public Key to Kernel module 307
- Public Key stored in BS module 308

EP 4 552 280 B1

**Figure 4**

Kernel module receives Transaction and data from EH module 401

KM: Send label L, transaction T and eMSK to TEE 402

SO module decrypts Master Secret Key 403

Error 405

Is decryption correct? 404

No

Yes

KD module derives Private Key from Master Secret Key and L 406

CT module signs transaction based on Private Key 407

CT module transmits signature to Kernel module 408

EP 4 552 280 B1

EH module transmits request for a DB Key to Kernel module 501

KM: Send DB label DBL and eMSK to SOM 502

SO module decrypts Master Secret Key 503

Is decryption correct? 504

No → Error 505

Yes → KD module derives DB Key from Master Secret Key and DBL 506

KD module transmits DB Key to Kernel module 507

Kernel module transmits queries and DB Key to EH module 508

**Figure 5**

**Figure 6**

Alice checks she owns digital asset A 601 → Transmit call to fractionalise digital asset A 602 → Bridge Module receives and checks the call 603 → Bridge Module transmits deserialised message to EH Module 604 → EH Module calls Kernel Module to initiate token issuance 605 → Kernel Module transmits digital asset data and Master Secret. Key to the SO Module 606 → SO Module derives Private and Public Key-pairs of each asset via KD Module 607 → SO Module transmits Public Keys to Kernel Module 608. → Kernel Module queries EH module to store Public keys in BS Module 609 → EH Module forwards each assets information and Public key to BS module 610 → BS Module stores each assets key-pair 611 → Kernel Module issues token generation query to EH Module 612 → EH Module transmits token generation query to BS Module 613 → BS Module creates digital assets A1 and A2 and send A1 and A2 to Crypt module to generate tokens TA1 and TA2 614 → Crypt module generates tokens TA1 and TA2 by applying LtHash on digital assets A1 and A2 respectively and sends TA1 and TA2 back to BS module 615 → BS module records or stores the digital assets A1 and A2, along with associated tokens TA1 and TA2 respectively in its database, 616 → EH Module calls Bridge module with completed message 617 → CT Module checks with homomorphic hashing synchronisation is maintained 618 → Bridge Module notifies Alice the fractionalisation operation is complete 619

28

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020387623 A1

**Non-patent literature cited in the description**

- **CONG WANG et al.** Ensuring Data Storage Security in Cloud Computing. *IACR, INTERNATIONAL ASSOCIATION FOR CRYPTOLOGIC RESEARCH*, 27 April 2009, vol. 20090427, 1-9